# EUROPÄISCHE PATENTANMELDUNG

(11) **EP 1 405 880 A1**
(43) Veröffentlichungstag der Anmeldung: **07.04.2004**
(21) Anmeldenummer: 03016381.0
(22) Anmeldetag: 19.07.2003
(51) Int. Cl.: C08L 95/00, C09D 195/00

(54) **Spritzabdichtungs-Zusammensetzung**

(30) Priorität: 01.10.2002 DE 10245708
(71) Anmelder: Remmers Baustofftechnik GmbH, D-49624 Löningen (DE)
(72) Erfinder: Mastall, Martin, 49624 Löningen (DE)
(74) Vertreter: Siekmann, Gunnar, Dipl.-Phys.

(57) **Zusammenfassung**

Die Erfindung betrifft eine Bitumen-Emulsion, zusammengesetzt aus folgenden Komponenten:
0 bis 70% emulgierfähiger Bitumen
0 bis 70% Wasser
0 bis 100% Polychloropren-Kautschuk
0 bis 10% Emulgator(en)
0 bis 10% Stabilisator(en)
sowie ein zweikomponentiges Spritzabdichtungssystem, welches neben der Bitumen-Emulsion eine Salzlösung umfasst. Die Komponenten werden getrennt so versprüht, dass sich die Sprühstrahlen kreuzen.

## Beschreibung

Die vorliegende Erfindung betrifft den Bereich der Bitumen Abdeckungen für Oberflächen, insbesondere der Spritzabdichtungen.

Derartige Abdichtungen sind erforderlich, um Dach- und Wandabdeckungen, welche gewöhnlich zur Isolierung auf Gemäuer aufgebracht werden, vor Witterungseinflüssen, wie Regen und Sonne, zu schützen. Im Stand der Technik werden hier ein- oder auch zweikomponentige Systeme, beispielsweise auf Polymer- oder Bitumenbasis, verwendet, die auf die jeweiligen Oberflächen durch Bestreichen oder Versprühen aufgebracht werden.

So beschreibt die DE 3 127 453 C2 ein Verfahren zum Herstellen eines wasserdichten Streckenausbaues in Berg- und Tunnelbau, bei dem durch Aufspritzen eine Abdichtungsschicht aus einem ungefüllten Zweikomponenten-Polyurethan gebildet wird. Das Zweikomponenten-Polyurethan wird so eingestellt, dass es nach dem Aufspritzen zu einer paraffinartigen, zähelastischen Masse aushärtet. Das Aufspritzen geschieht mit einer Mischpistole.

Im Prinzip ist es auch bekannt, die zwei Komponenten eines zweikomponentigen Systemes durch separates Verspritzen aufzutragen, was ein Verstopfen der Spritzgeräte verhindert bzw. deren mühselige Reinigung. In diesem Zusammenhang sei auf einen Artikel von Dr. Uwe Wirringa "Immer öfter...die Spritzabdichtung pastöser Abdichtungsbaustoffe" in Praxis, B+B, Heft 4, 2002 verwiesen werden.
Im Stand der Technik bekannte Systeme und ihre Einsatzmethoden beinhalten verschiedene Nachteile. So können Spritzabdichtungen auch grobkörnige Bestandteile enthalten. Um ein Entmischen zu verhindern sind höhere Viskositäten notwendig. Auch können diese Systeme nur mit Luft zerstäubt werden, was zwangsläufig zu einer Sprühnebelbildung führt, die aus Gründen des Umweltschutzes und aus gesundheitstechnischen Gründen unerwünscht ist.

Bei einkomponentigen Systemen muß die Viskosität der Emulsion relativ hoch eingestellt werden. Zum einen darf eine Mindestschichtdicke von 4 bis 6 mm an senkrechten Flächen nicht abrutschen und gleichzeitig muß ein Verspritzen noch gewährleistet sein. Bedingt durch die Viskositätshöhe sind auch höhere Spritzdrücke und/oder zusätzlich Luft notwendig, was zu einer erhöhten Sprühnebelmenge führt. Ferner bleiben solche Beschichtungsmassen wegen der für das Verspritzen notwendigen Stabilität bis zu mehreren Stunden regenempfindlich.

Bei zweikomponentigen Systemen erfolgt das Vermischen der beiden Komponenten entweder noch im Gebinde oder in einem Mischkopf in der Spritzpistole. In beiden Fällen ist eine längere Topfzeit notwendig. Bedingt durch eine relativ hohe Viskosität der Emulsion sind hohe Spritzdrücke und/oder zusätzlich Luft notwendig. Das führt zu einer starken Sprühnebelbildung. Im Gebinde angerührte Abdichtungen erfordern nach Beendigung der Arbeiten eine sofortige Reinigung der Spritzanlage. Die durch die zweite Komponente eingestellte Regenfestigkeit unmittelbar nach der Verarbeitung ist nicht ausreichend.

Aufgabe der vorliegenden Erfindung ist es, eine Emulsion und ein System sowie ein Verfahren anzugeben, mit welchem sich die vorher genannten Nachteile vermeiden lassen. Insbesondere soll eine Möglichkeit angegeben werden, mit niedrigen Spritzdrücken arbeiten zu können, um Sprühnebelbildung zu verhindern und es sollen höhere Schichtdikken in einem Auftrag auch an senkrechten Flächen erzeugt werden können, welche nahezu unmittelbar nach dem Auftrag regenfest sind.

Gegenstand der vorliegenden Erfindung ist zum einen eine neue Bitumen-Emulsion , welche aus den folgenden Komponenten zusammengesetzt ist:
0 bis 70% emulgierfähiger Bitumen
0 bis 70% Wasser
0 bis 100% Polychloropren-Kautschuk
0 bis 10% Emulgator(en)
0 bis 10% Stabilisator(en).

Bevorzugte Mengenbereiche der einzelnen Komponenten sind in Unteranspruch 2 und weitere bevorzugte Ausführungsformen in den Unteransprüchen 3 und 4 angegeben.

Gegenstand der vorliegenden Erfindung ist auch ein zweikomponentiges System zur Erzeugung einer Abdichtung auf Oberflächen, wobei die erste Komponente die beanspruchte Bitumen-Emulsion und die zweite Komponente eine Salzlösung ist.

Die Salzlösung ist vorzugsweise eine leicht lösliche Calciumsalzlösung, in welcher das Calciumsalz bevorzugt zwischen 1 bis 30%, bevorzugter zwischen 5 und 20% und insbesondere zu 10% enthalten ist.

Ferner ist Gegenstand der vorliegenden Erfindung auch ein Verfahren zur Erzeugung einer Abdichtung auf Oberflächen durch separates Versprühen der zwei Komponenten des Systemes derart, dass sich die Sprühstrahlen kreuzen, wobei durch Koagulation der Komponenten und anschließendes Aushärten die Abdichtung der Oberfläche erzeugt wird.

Die erfindungsgemäße Bitumen-Emulsion besitzt eine sehr niedrige Viskosität und kann ohne zweite Komponente als Vor-und Schutzanstich verwendet werden.

Durch den Zusatz der Salzlösung als zweite Komponente, wobei beide Komponenten getrennt versprüht werden, so dass sich die Sprühstrahlen kreuzen, wird eine äußerst zufriedenstellende Abdichtung von horizontalen bis senkrechten Oberflächen auch in großen Schichtdicken erreicht. So sind mit dem zweikomponentigen System gemäß der Erfindung auch auf senkrechten Flächen Schichtdicken bis zu 2cm in einem Auftrag möglich. Die Topfzeit beträgt nur wenige Sekunden. Die Beschichtung ist unmittelbar nach dem Auftrag auf die Oberfläche regenfest. Es sind keine hohen Spritzdrücke erforderlich, so dass nur wenig Sprühnebel entsteht. Die Emulsionskomponente kann in jeder beliebigen Größe, bis hin zu TKW, vorgefertigt geliefert werden und alle Arbeiten können zu jeder Zeit ohne Reinigungsaufwand unterbrochen werden.

Mit dem Gegenstand der vorliegenden Erfindung werden somit alle aus dem Stand der Technik bekannten Nachteile überwunden und es bieten sich durch die ausgesprochen leichte Handhabung eine Vielzahl von Anwendungen.

## Patentansprüche

1. Bitumen-Emulsion zusammengesetzt aus folgenden Komponenten:
0 bis 70% emulgierfähiger Bitumen
0 bis 70% Wasser
0 bis 100% Polychloropren-Kautschuk
0 bis 10% Emulgator(en)
0 bis 10% Stabilisator(en).

2. Bitumen-Emulsion nach Anspruch 1, **gekennzeichnet durch** folgende Zusammensetzung:
30 bis 60% emulgierfähiger Bitumen
40 bis 70% Wasser
0 bis 35% Polychloropren-Kautschuk
0,1 bis 3% Emulgator(en)
0,1 bis 5% Stabilisator(en).

3. Bitumen-Emulsion nach Anspruch 1 oder 2,**dadurch gekennzeichnet, dass** der Bitumen eine Polymervergütung aufweist.

4. Bitumen-Emulsion nach einem der Ansprüche 1 bis 3, **dadurch gekennzeichnet, dass** ein synthetischer, anionischer Emulgator enthalten ist.

5. Zweikomponentiges System zur Erzeugung einer Abdichtung auf Oberflächen, wobei die erste Komponente die Bitumen-Emulsion nach einem der Ansprüche 1 bis 4 und die zweite Komponente eine Salzlösung ist.

6. Zweikomponentiges System nach Ausspruch 5, **dadurch gekennzeichnet, dass** die Salzlösung aus einem leicht löslichen Calciumsalz gebildet ist.

7. Zweikomponentiges System nach Ausspruch 5 oder 6, **dadurch gekennzeichnet, dass** eine 1 bis 30%-ige, vorzugsweise eine 5 bis 20%-ige, insbesondere 10%-ige Salzlösung eingesetzt wird.

8. Verfahren zur Erzeugung einer Abdichtung auf Oberflächen durch separates Versprühen der zwei Komponenten des Systems nach einem der Ansprüche 5 bis 7 derart, dass sich die Sprühstrahlen kreuzen, wobei durch Koagulation der Komponenten und anschließendes Aushärten die Abdichtung der Oberfläche erzeugt wird.
